# EUROPEAN PATENT SPECIFICATION

(11) **EP 2 070 622 B1**
(45) Date of publication and mention of the grant of the patent: **18.09.2013**
(21) Application number: 08021527.0
(22) Date of filing: 11.12.2008
(51) Int. Cl.: B23D 45/04, B27G 19/04, B23D 47/12

(54) **Cutting devices**
Schneidvorrichtungen
Dispositifs de coupe

(30) Priority: 12.12.2007 JP 2007320664; 20.11.2008 JP 2008296777
(43) Date of publication of application: 17.06.2009
(73) Proprietor: Makita Corporation, Anjo-shi, Aichi-ken (JP)
(72) Inventor: Miura, Masahiko, Anjo-shi Aichi-ken (JP)
(74) Representative: Kramer - Barske - Schmidtchen

(56) References cited:
- EP-A- 0 570 903
- EP-A- 1 604 764
- EP-A1- 1 604 764
- US-A- 5 249 496
- US-A1- 2005 247 178

## Description

This application claims priority to Japanese patent application serial numbers 2007-320664 and 2008-296777.

The present invention relates to a cutting device according to the preamble of claim 1.

Such a cutting device is known from US 2005/247178 A1.

Cutting devices are known that include a tool unit having a body case (called "blade case") and a movable cover for covering substantially upper and lower halves, respectively, of a rotary cutting tool. An electric motor as a drive source is disposed on the back side of the body case. The rotation of the motor is transmitted to a spindle via a reduction gear mechanism. The spindle extends into the body case. A cutting tool is mounted to a part of the spindle extending into the body case.

As the tool unit moves downward, the movable cover is gradually opened to expose the lower half of the cutting tool, so that the lower half of the cutting tool cuts a workpiece. Therefore, a part of the cutting tool available for cutting the workpiece is limited to a region on a lower side of the spindle. In addition, in general, the spindle is supported on a rear side portion of the body cover by means of a bearing. As a result, a part of the cutting tool available for cutting the workpiece is limited to a lower region exposed from the body case at the maximum.

US Patent Publication No. 2002/0152867 teaches a construction in which a spindle having a rotary cutting tool mounted thereon is shifted to a position below the lower end of a body case. According to this publication, between the spindle and an output shaft of an electric motor as a drive source, a belt-drive mechanism or a reduction gear mechanism having a plural number of reduction stages is provided for ensuring a large distance between the spindle and the output shaft of the motor. With this arrangement, the position of the electric motor as well as the position of the lower end of the body case can be set at a higher level. Therefore, it is possible to ensure a large lower exposed region of the cutting tool.

With the technique of the above publication, the spindle can be positioned on the lower side of the lower end of the body case, so that a maximum cutting depth of the workpiece can be increased because of inclusion of the region of the spindle into a part available for cutting. Therefore, it is possible to cut a workpiece having a relatively large thickness. Although this is effective when a cutting operation is performed with a workpiece laid down along an upper surface of a table, this is still not effective when a cutting operation is performed in the following specific mode.

For example, in the case that a workpiece is a residential building material, such as a crown molding material, in which opposite sides in a widthwise direction are inclined in opposite directions to each other with respect to a thickness direction, and this workpiece is to be cut obliquely with respect to the widthwise direction, an oblique cutting operation of the workpiece is performed with the workpiece typically positioned in the following manner in order to cut the workpiece at an accurate angle relative to the inclined opposite sides. Thus, the workpiece is fixed in an inclined position between the table and a positioning fence with the opposite sides of the workpiece contacting in face-to-face relationship with the upper surface of the table and the positioning surface of the fence. Thereafter, the table is rotated to a suitable angular position for obliquely cutting the workpiece by the rotating cutting tool.

In this specification, a cutting operation performed with a spindle (i.e., the rotational axis of a cutting tool) positioned parallel to a table and with a workpiece positioned obliquely relative to the spindle, for example, by rotating the table, is called "oblique cutting operation", and a cutting operation performed with the spindle inclined relative to the upper surface of the table, for example, by laterally pivoting the tool unit, is called "inclined cutting operation."

In the case that a cutting operation is performed with the workpiece fixed in an inclined position between the table and a positioning fence as noted above, the maximum cutting depth is not restricted by the spindle but is restricted by the position of the lower end of the body case on the rear side of the spindle. Therefore, in the case that a workpiece having a relatively large width is to be cut in an inclined position, no further cutting can be made after the lower end of the body case has contacted the upper end of the fence. For this reason, it may be necessary to perform the cutting operation with the workpiece laid along the table. This problem also may be cause in the case that a cutting operation is performed with a workpiece positioned in an upright position while one side in the widthwise direction of the workpiece extends along the fence.

In particular, when the cutting operation is performed with a crown molding material as a workpiece laid down along the table, it is necessary to cut the workpiece at an accurate angle relative to inclined widthwise side surfaces. Therefore, it requires to position the cutting tool at a suitable angle with respect to a direction of thickness of the workpiece by inclining the tool unit in addition to incline the cutting direction of the cutting tool with respect to the widthwise direction of the workpiece by rotating to the table. Therefore, the cutting operation is troublesome also in this respect. In general, in order to cut a crown molding material, the position or inclination angle of a tool unit is determined by using a table numerically indicating the relationship between an inclination angle of opposite sides in a widthwise direction of a workpiece and cut angles of a rotary tool with respect to both of a widthwise direction and a thickness direction. Therefore, a rapid and accurate cutting operation is not possible.

Therefore, there has been a need for a cutting device that enables rapid and accurate cutting operations for a variety of workpieces.

This object is achieved by a cutting device according to claim 1. Further developments are given in the dependent claims.

Additional objects, features, and advantages, of the present invention will be readily understood after reading the following detailed description together with the claims and the accompanying drawings, in which:
FIG. 1 is a side view of a cutting device according to a first embodiment of the present invention;
FIG. 2 is a cross sectional view taken along line (2)-(2) in FIG. 1;
FIG. 3 is an enlarged cross sectional view of a drive system of the cutting device shown in FIG. 1;
FIG. 4 is a left side view as viewed from the side of an operator of a cutting device according to a second embodiment of the present invention and showing a tool unit returned to an uppermost position and a frontmost slide position;
FIG. 5 is a side view similar to FIG. 4 but showing the tool unit moved to a lower stroke end and held in position at the frontmost slide position;
FIG. 6 is a side view similar to FIG. 4 but showing the situation where the tool unit has stopped at an intermediate position by an intermediate stopper mechanism and a front portion of an auxiliary cover has get on an upper portion of a positioning fence;
FIG. 7 is a vertical sectional view of the cutting device and showing its internal structure when in the situation shown in FIG. 6;
FIG. 8 is a perspective view of an upper slide mechanism and its associated parts of the cutting device as viewed from an upper and rear side and showing the tool unit positioned at a frontmost slide position settable by the upper slide mechanism;
FIG. 9 is a perspective view similar to FIG. 8 but showing the tool unit positioned at the frontmost slide position settable by the upper slide mechanism;
FIG. 10 is an enlarged view of a drive system of the cutting device; and
FIG. 11 is an exploded perspective view of the drive system.

Each of the additional features and teachings disclosed above and below may be utilized separately or in conjunction with other features and teachings to provide improved cutting devices. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

In one embodiment, a cutting device includes a table having an upper surface for placing thereon a workpiece, a positioning fence operable to position the workpiece on the upper surface of the table, and a tool unit vertically movably supported on the table. The tool unit includes an electric motor as a drive source, a spindle rotatably driven by the motor, a rotary cutting tool mounted to the spindle, and a fixed cover configured to cover an upper portion of the cutting tool. The fixed cover has a lower end portion including a front part positioned on a front side of an operator with respect to the spindle and a rear part positioned on a rear side with respect to the spindle so as to be able to oppose to the positioning fence from an upper side. The rear part of the lower end portion of the fixed cover is positioned at a higher level than the front part when the tool unit is positioned a substantially lower movable end.

With this arrangement, the fixed cover does not interact with the fence. Because the fence can have a positioning surface having a large height, a workpiece having a large width can be positioned in an inclined position between the positioning surface and the upper surface of the table. Therefore, an inclined cutting operation of a crown molding material can be rapidly accurately performed. In addition, because the cutting depth allowed by the rear part of the lower end portion of the fixed cover is larger than the cutting depth allowed by the front part, a workpiece having a relatively large width can be cut by positioning the workpiece in an upright position along the fence or in an inclined position between the upper surface of the table and the fence.

The cutting device further includes a gear train configured to transmit rotation of the motor to the spindle. The gear train includes a drive gear on the side of the motor, an output gear on the side of the spindle, and an intermediate gear positioned between the drive gear and the output gear and engaging the drive gear and the output gear. With this arrangement, it is possible to increase the distance between the output shaft of the motor and the spindle, so that the position of the motor can be set at a higher level. Therefore, the height of the fence can be increased and the cutting operation of a workpiece, such as a crown molding material, can be rapidly accurately performed. In addition, because the tool unit can be inclined toward the side of the motor by a large angle, a maximum inclination angle of the tool unit for an inclined cutting operation can be improved, so that the applicability of the cutting device can be improved.

The cutting device may further include an intermediate shaft having the intermediate gear mounted thereto and extending parallel to the spindle. The intermediate shaft is supported by the fixed cover, so that the intermediate shaft can rotate about its axis and is prevented from moving along an axial direction. Therefore, a thrust force that may be applied to the intermediate shaft can be received by the fixed cover. Hence, potential impacts applied to the intermediate shaft when starting and stopping the motor can be reduced, so that the durability of the gears associated with the intermediate shaft can be improved, and it is possible to reduce sounds that may be produced by engagement between gears.

One of a distance L1 in a vertical direction between a center of rotation of the rotary cutting tool and the upper surface of the table and a distance L2 in a horizontal direction between the center of rotation of the rotary cutting tool and a positioning surface of the fence may be 81 mm. The other of the distance L1 and the distance L2 may be 97 mm. A distance L3 in the vertical direction between the rear part of the lower end portion of the fixed cover and the upper surface of the table may be equal to or more than 119 mm, preferably between 119 mm and 145 mm, at a position on the front side of the positioning surface of the fence. With this determination, it possible to improve the applicability to crown molding materials that are frequently used in the market. Thus, the frequently used crown molding materials have a maximum width of about 168.3 mm. When a crown molding material having this maximum width is positioned to be propped against the fence and to be inclined by an angle of 45° between the upper surface of the table and the fence, the inclined material may have a height of about 119 mm from the upper surface of the table. Therefore, it is possible to rapidly accurately cut the frequently used crown molding materials by using the cutting device. Setting L3 to be between 119 mm and 145 mm can be advantageously applied both in the case of L1 = 97 mm and L2 = 81 mm and in the case of L1 = 81 mm and L2 = 97mm.

A distance in a vertical direction between the rear part of the lower end portion of the fixed cover and the upper surface of the table may be equal to or more than 119 mm, preferably between 119 mm and 145 mm, when a peripheral edge of the cutting tool is positioned proximal to a line of intersection between the positioning surface of the fence and the upper surface of the table, while the tool unit is positioned at its lower stroke end. With this determination, without causing interaction of the fixed cover against the material and without leaving an uncut part, it is possible to cut a frequently used crown molding material positioned at an inclined position between the fence and the upper surface of the table.

The tool unit may be movable in a horizontal direction relative to the table within a predetermined movable range, and the cutting device further includes an intermediate stopper mechanism operable to stop the horizontal movement of the tool unit at a position where the peripheral edge of the cutting tool is positioned proximal to the line of intersection between the positioning surface of the fence and the upper surface of the table.

The cutting device may further include a movable cover movable to cover and uncover a lower portion of the rotary cutting tool in response to the vertical movement of the tool unit.

The cutting device may further include an auxiliary cover configured to cover a part of the cutting tool that cannot be covered by the fixed cover and the movable cover.

The cutting device may further include an auxiliary fence attachable to the positioning fence for increasing a height of a positioning surface of the positioning fence.

In another embodiment, a cutting device includes a table having an upper surface for placing thereon a workpiece, a positioning fence operable to position the workpiece on the upper surface of the table, and a tool unit vertically movably supported on the table. The tool unit includes an electric motor as a drive source, a spindle rotatably driven by the motor via a gear train, a rotary cutting tool mounted to the spindle, and a fixed cover configured to cover an upper portion of the cutting tool. The gear train includes a drive gear on the side of the motor, an output gear on the side of the spindle, and a driven gear and an intermediate gear positioned between the drive gear and the output gear. The intermediate gear receives transmission of force from the driven gear. The driven gear engages the drive gear. The motor is mounted to the fixed cover, so that an output shaft of the motor is oriented downwardly and is inclined relative to the vertical direction. Each of the drive gear and the driven gear is a bevel gear. With this arrangement, it is possible to ensure a large distance between the output shaft of the motor and the spindle. Therefore, the motor can be positioned at a higher position to set the lower end of the fixed cove at a higher position. Hence, it is possible to ensure a large cutting depth of the cutting tool. In addition, because the motor is inclined and oriented downward, it is possible to tilt the tool unit toward the side of the motor by a large angle. Therefore, an inclined cutting operation can be performed with the tool unit inclined by a large angle.

In a further embodiment, a cutting device includes a table having an upper surface for placing thereon a workpiece, a positioning fence operable to position the workpiece on the upper surface of the table, and a tool unit vertically movably supported on the table. The tool unit includes an electric motor, an intermediate shaft, a spindle and a tool mounted to the spindle. The electric motor has an output shaft and a drive gear rotatable with the output shaft. The intermediate shaft has a driven gear and an intermediate gear each rotatable with the intermediate shaft. The driven gear engages the drive gear. The spindle has an output gear rotatable with the spindle and having an output gear engaging the intermediate gear. The motor is supported on the tool unit, so that the output shaft of the motor is oriented downwardly and is inclined relative to the vertical direction. Each of the drive gear and the driven gear is a bevel gear.

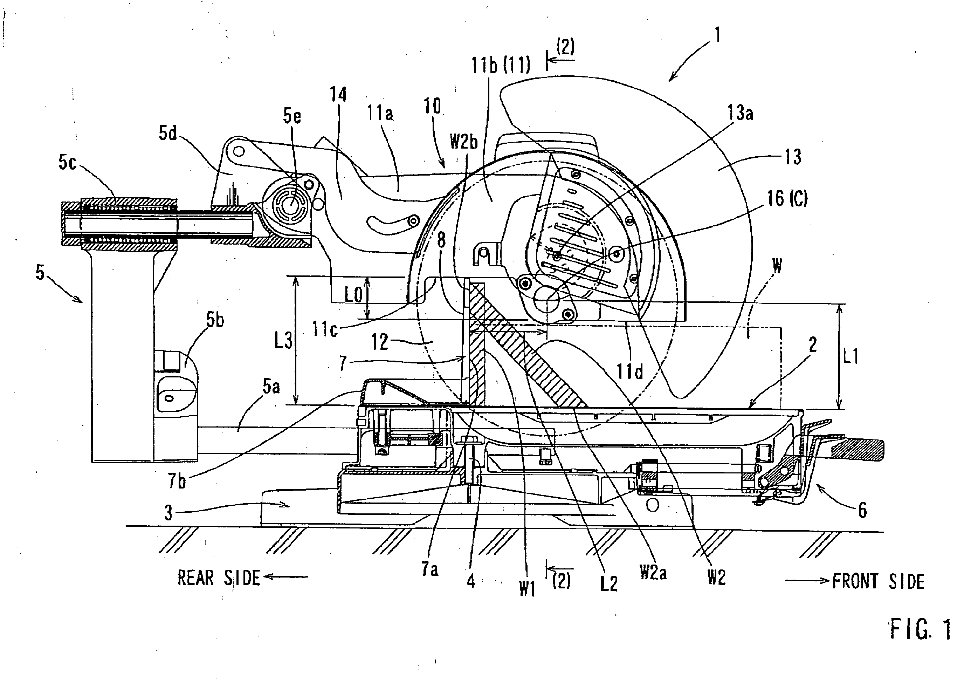

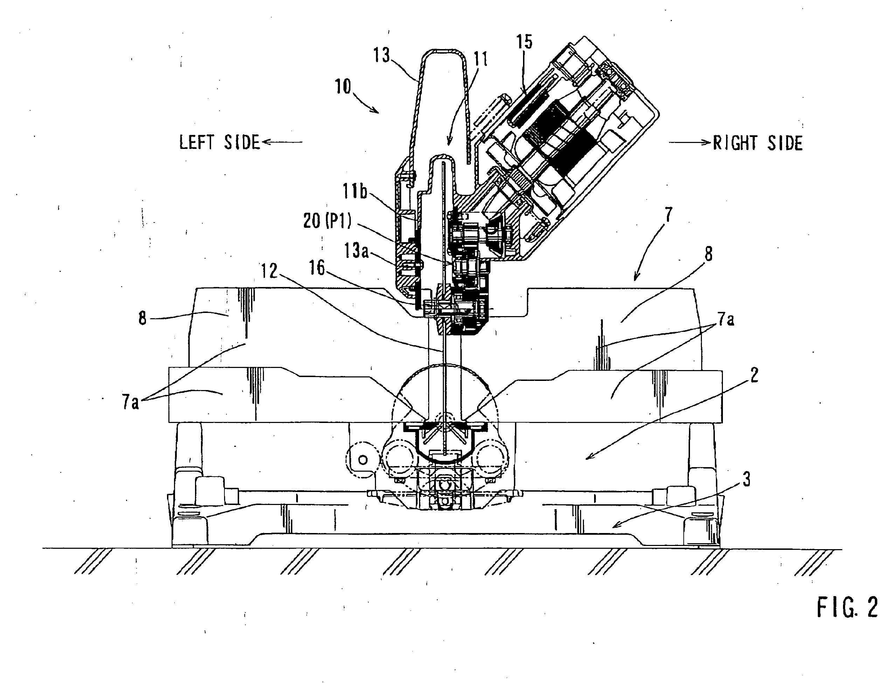

A cutting device I according to a first embodiment of the present invention will now be described with reference to FIGS. 1 to 11. The cutting device 1 of this embodiment is configured as a slide-type cutting device. An operator for operating the cutting device I may be positioned on a right side as viewed in FIG. 1. Therefore, the description will be made assuming the side of the operator (right side in FIG. 1) as a front side, the side opposite to the operator (left side in FIG. 1) as a rear side. Also, the description will be made assuming the right side and the left side of the operator as a right side and a left side (see FIG. 2), respectively.

The cutting device 1 includes a table 2 for placing thereon a workpiece W, a base 3 for horizontally rotatably supporting the table 2, and a support 5 for supporting a tool unit on the table 2. In this embodiment, the table 2 is horizontally rotatably supported on an upper surface of the base 3 by a rotational shaft 4. A positioning mechanism 6 is disposed on the front portion of the table 2 for fixing the table 2 at a desired rotational angle relative to the base 3.

A fence 7 is mounted on the upper surface of the table 2 for positioning the workpiece W with respect to a direction parallel to the upper surface of the table 2 (i.e., the horizontal direction). The fence 7 extends over the table 2 in right and left directions as viewed in FIG. 2 and is spaced from the table 2 by a small clearance, so that the table 2 can rotated without being interfered with the fence 7.

A front surface (a surface on the side of the operator) of the fence 7 includes a pair of right and left positioning surfaces 7a for contacting with the workpiece W. As shown in FIG. 2, the positioning surfaces 7a are spaced from each other by a clearance, through which a rotary tool 12 can pass. Back side portions of the positioning surfaces 7a are joined to each other via a joint portion 7b.

As shown in FIG 1, the positioning surfaces 7a are positioned within a plane that includes an axis of the rotational shaft 4. Therefore, in a plan view, the positioning surfaces 7a always extend through the axis of the rotational shaft 4 (i.e., the rotational center of the table 2) throughout the rotational range of the table 2.

As shown in FIG 2, auxiliary fences 8 can be attached to the fence 7 in order to increase the height of the positioning surfaces 7a as measured from the upper surface of the table 2. Thus, by attaching the auxiliary fences 8 to the fence 7, the size of each positional surface 7a in the direction of the height can be increased. Therefore, if the workpiece W has a thin plate-like configuration, the workpiece W can be accurately positioned at an upright position while the workpiece W contacts the positioning surfaces 7a with its widthwise direction oriented in the vertical direction. In addition, by using the auxiliary fences 8, it is possible to position a workpiece W2, which is a crown molding material having opposite sides W2a and W2b inclined with respect to a thickness direction, in an inclined position between the fence 7 and the upper surface of the table 2 with one side W2a contacting with the upper surface of the table 2 and with the other side W2b contacting with the upper portions of the positioning surfaces 7a. The operation for positioning the workpiece W2 will be explained later.

The support 5 is disposed at the rear portion of the table 2 and can support the tool unit 10 such that the tool unit 10 can slide in the horizontal direction (more specifically, forward and rearward directions as viewed from the side of the operator or right and left directions as viewed in FIG 1) and can tilt in right and left directions (a direction perpendicular to the sheet of FIG. 1) and also in a vertical direction. For this purpose, the support 5 includes an upper slide mechanism 5a, a right and left tilt mechanism 5b, an upper slide mechanism 5c and a vertically tilt mechanism 5d.

The lower slide mechanism 5d mainly includes a pair of right and left slider bars that are axially slidably supported on the lower side of the table 2. The right and left tilt mechanism 5b is attached to rear portions of the slide bars and allows the tool unit 10 to be tilted in right and left directions as viewed from the side of the operator. Therefore, it is possible to perform an inclined cutting operation. In addition, the right and left tilt mechanism 5b allows to perform a vertical cutting operation, in which the tool unit 10 is fixed in position with the cutting tool 12 positioned within a vertical plane.

The upper slide mechanism 5c is attached to the upper portion of the right and left tilt mechanism 5b and mainly includes a pair of right and left slide bars. The sliding direction of the upper slide mechanism 5c is parallel to the sliding direction of the lower slide mechanism 5a.

The vertically tilt mechanism 5d is mounted to front portions of the slider bars of the upper slide mechanism 5c and includes a pivot shaft 5e. The tool unit 11 is vertically pivotally supported by the upper slide mechanism 5c by means of the pivot shaft 5e.

The tool unit 10 includes a body case 11 that has a support arm 11a vertically pivotally supported by the pivot shaft 5e. The tool unit 10 also has a fixed cover 11b that covers substantially the upper half of the cutting tool 12.

A movable cover 13 can cover and uncover substantially the lower half of the cutting tool 12. The movable cover 13 is vertically pivotally supported by the fixed cover 11b via a support shaft 13a. The movable cover 13 is interlocked with the vertically tilt mechanism 5d via a link arm 14, so that the movable cover 13 pivots in a counterclockwise direction as viewed in FIG. 1 so as to be opened as the tool unit 10 tilts downward, and the movable cover 13 pivots in a clockwise direction so as to be opened as the tool unit 10 tilts upward. As the movable cover 13 is opened, the lower half of the cutting tool 12 is exposed to the outside, and the workpiece W is cut by the exposed part of the cutting tool 12. As the tool unit 10 pivots upward, the movable cover 13 is closed, so that the cutting tool 12 can be substantially entirely covered by the fixed cover 11b and the movable cover 13.

An electric motor 15 as a drive source is mounted to a back side (right side as viewed in FIG. 2) of the fixed cover 11b in such a manner that an output shaft 15a of the motor 15 is oriented downwardly and is inclined by an angle of 45° relative to a vertical direction. Therefore, the rear portion of the electric motor 15 is oriented upward. The rotation of the output shaft 15a of the motor 15 is transmitted to a spindle 16 via a reduction gear mechanism (gear train) 20 that serves as a power transmission mechanism. The cutting tool 12 has a circular configuration and is mounted to the spindle 16, so that the rotational axis of the spindle 16 defines a rotational center C of the cutting tool 12.

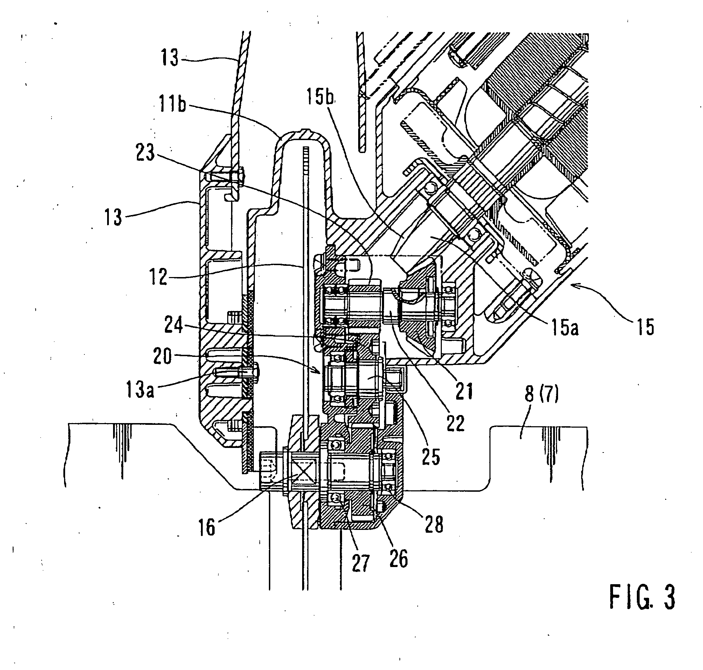

A drive system including the reduction gear mechanism 20 is shown in detail in FIG. 3. As shown in FIG. 3, a drive gear 15b is formed on a tip end of the output shaft 15a of the motor 15. The drive gear 15b is in engagement with a driven gear 21 that is fixedly mounted to a first intermediate shaft 22. A first intermediate gear 23 is also fixedly mounted to the first intermediate shaft 22, so that the first intermediate gear 23 rotates with the first intermediate shaft 22 as the driven gear 21 rotates. The first intermediate gear 23 is in engagement with a second intermediate gear 24. The second intermediate gear 24 is fixedly mounted to a second intermediate shaft 25 that extends in parallel to the first intermediate shaft 22. Each of the first intermediate shaft 22 and the second intermediate shaft 25 is rotatably supported on the back side of the fixed cover 11b via bearings.

The second intermediate gear 24 is in engagement with an output gear 26 that is fixedly mounted to the spindle 16. The spindle 16 is rotatably supported on the back side of the fixed cover 11b via bearings 27 and 28. In this way, according to this embodiment, the reduction gear mechanism 20 having two reduction stages is interleaved between the output shaft 15a of the motor 15 and the spindle 16. Therefore, the position of the motor 15 is spaced upwardly from the spindle 16 by a large distance in comparison with the arrangement where an output gear of an electric motor directly engages an input gear of a spindle. As described above, the motor 15 is positioned to be inclined downwardly with the rear portion of the motor 15 oriented upward.

In this embodiment, the cutting tool 12 rotates in a clockwise direction as viewed in FIG. 1. The spindle 16 is positioned at a central part of the lower end portion of the fixed cover 11b. A rear part 11c of the lower end portion of the fixed cover 11b disposed on the rear side (left side as viewed in FIG. 1) is recessed so as to be positioned at a higher level than a front part 11d of the lower end portion by a distance of L0. As shown in FIG. 1, when the tool unit 10 is positioned at a lowermost position, the fence 7 is positioned below the rear part 11c. However, the rear part 11c is recessed as described above, and therefore, even in the case that the auxiliary fences 8 are attached to the fence 7 to increase the height of the positioning surfaces 7a, the rear part 11c does not interact with the fence 7 (auxiliary fences 8) when the tool unit 10 tilts vertically downward toward its lower most position.

The distance L0 may be determined by taking into account the following conditions. Assuming that a vertical distance L1 between the rotation center C of the cutting tool 12 and the upper surface of the table 2 serving as a workpiece placing surface is 97 mm and that a horizontal distance L2 between the rotation center C and the positioning surfaces 7a of the fence 7 is 81 mm, the position of the rear part 11c is set such that a vertical distance or a height L3 from the upper surface of the table 2 to the rear part 11c is within a range of between 119 mm and 145 mm. With this determination, the distance L0 can be suitably set.

The above values of L1 and L2 (L1 = 97 mm; L2 = 81 mm) are normally applied when a chip saw of 10 inch type having a diameter of 253 mm to 262 mm is used as a cutting tool. With these set values, a few millimeters of tolerance can be given to eliminate non-cutting region at a position where the upper surface of the table 2 intersects with the positioning surfaces 7a. It should be noted that a diameter of a circle having the center C and passing through a line where the upper surface of the table 2 intersects the positioning surfaces 7a can be calculated by an expression ([97² + 81²] ^{1/2}*2 ≈ 252.74). Thus, a non-cutting region may be produced if the value of L1 (L1 = 97 mm) or the value of L2 (L2 = 81 mm) is increased even by a few millimeters.

The minimum value of 119 mm of the vertical distance L3 is applied to crown molding materials having a particular size frequently used in the market. Thus, when the materials having the particular size are positioned to be inclined while being propped against the fence, the height of the materials from the table surface may be 119mm. The maximum value of 145 mm of the vertical distance L3 is applied to crown molding material having a relatively large size. This is a necessary value for cutting crown molding materials that have a maximum limit of size for avoiding interaction with the rear part 11d of the lower end portion of the fixed cover 11b when these materials are positioned to be inclined while being propped against the fence. In this embodiment, the value of the vertical distance L3 is set to 125 mm.

The value of the vertical distance L1 and the horizontal distance L2 for achieving the minimum of 119 mm for the vertical distance L3 can avoid the non-cutting region, while it is possible to avoid the non-cutting region even if the vertical distance L1 and the horizontal distance L2 are set to be 81 mm and 97 mm, respectively.

As described above, according to this embodiment, the rear part 11c of the lower end portion of the fixed cover 11b, to which the fence 7 may oppose from the lower side, is recessed upward relative to the front part 11d of the lower end portion. Therefore, even if the height of the positioning surfaces 7a has been increased by attaching the auxiliary fences 8 to the fence 7, it is possible to avoid interaction of the rear part 11d with the fence 7 (more specifically the auxiliary fences 8), so that a large cutting depth of the cutting tool 12 can be ensured.

In addition, increase in height of the positioning surfaces 7a of the fence 7 enables a cutting operation of a workpiece W1 having a band-plate like configuration with a uniform width as shown in FIG 1 by fixing the workpiece W1 in an upright position by using the positional surfaces 7a.

Further, it is possible to perform a cutting operation of the workpiece W2 by fixing the workpiece in an inclined position between the table 2 and the fence 3. The workpiece W2 has opposite side surfaces W2a and W2b inclined with respect to the thickness direction. The side surfaces W2a and W2a incline in directions opposite to each other, so that the workpiece has a trapezoidal cross section. The work piece W2 is fixed in position with its one inclined side surface W2a contacting with the upper surface of the table 2 and with the other inclined side surface W2b contacting with the positioning surfaces 7a of the fence 7.

If a cutting operation of the workpiece W2 (crown molding material) is performed obliquely relative to the widthwise direction with the workpiece W2 fixed in a position laid down along the upper surface of the table 2 or an upright position along the positioning surfaces 7a, it is not possible to cut the workpiece W2 at an accurate angle relative to the inclined side surfaces W2a and W2b by simply rotating the table by a fixed angle from the rotational position for a normal cutting operation. Therefore, as described in BACKGROUND OF THE INVENTION, it is necessary to correct the cut angle of the cutting tool 12 in relation to the inclination angle of the opposite inclined side surfaces by tilting the tool unit 10 rightward or leftward with respect to a cutting direction by a small distance in reference to a table that indicates the relationship between an inclination angle of opposite side surfaces and cut angles.

In contrast, according to the above embodiment, the cutting operation can be performed with the workpiece W2 positioned in an inclined position between the table 2 and the fence 7 by positioning the inclined side surface W2a to contact with the upper surface of the table 2 and positioning the inclined side surface W2b to contact with the positioning surfaces 7a of the fence 7. Therefore, it is possible to cut the workpiece W2 at an accurate angle relative to the inclined opposite side surfaces W2a and W2b by simply rotating the table 2 without need of correction by leftwardly or rightwardly tilting the tool unit 10.

Further, the reduction gear mechanism 20 of the cutting device 1 of this embodiment is configured as a two-stage reduction mechanism. Therefore, it is possible to set a large distance between the axis of the output shaft 15a of the motor 15 and the axis of the spindle 16. In addition, because the motor 15 is inclined downwardly with its rear portion oriented upward, the height of the fence 7 (or the auxiliary fences 8) can be increased. By increasing the height of the fence 7, a cutting operation of a workpiece having a large width (such as a crown molding material) can be rapidly accurately performed with the workpiece positioned in an inclined position while being propped against the fence 7. Further, because the motor 15 can be positioned upwardly of the spindle 16 by a large distance, it is possible to perform an inclined cutting operation with the tool unit 10 inclined by a large angle toward the side of the motor 15.

The above embodiment can be modified in various ways. For example, the upper and lower slide mechanisms 5a and 5c can be omitted. In addition, the auxiliary fences 8 can be omitted in the case that the workpiece W2 is fixed in an inclined position while being propped against a fence having a small height.

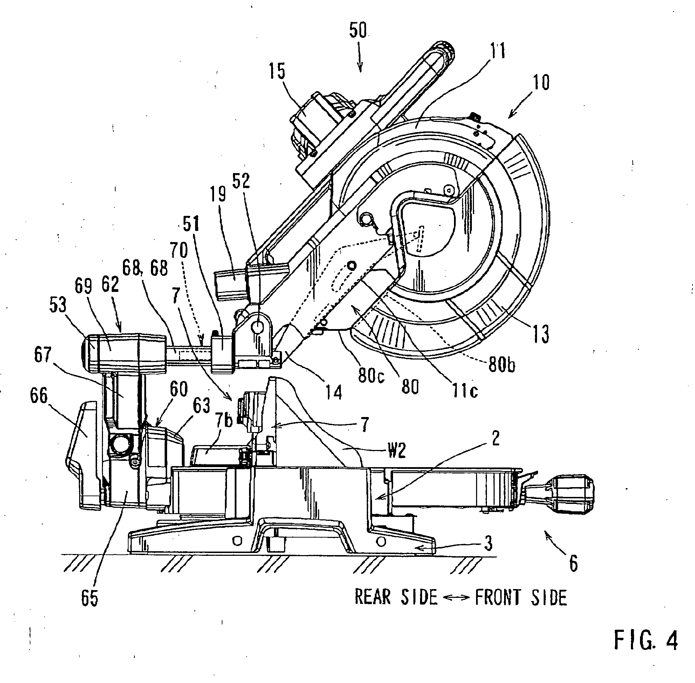

A cutting device 50 according to a second embodiment of the present invention will now be described with reference to FIGS. 4 to 9. This embodiment is a modification of the first embodiment and the cutting device 50 is different from the cutting device 1 mainly in that an intermediate stopper mechanism 70 and an auxiliary cover 80 are incorporated. Therefore, in FIGS. 4 to 9, like members are given the same reference signs as the first embodiment and the description of these members will not be repeated.

In this embodiment, the tool unit 10 is forwardly slidably movable by upper and lower slide mechanisms 61 and 62 and is tiltable in right and left directions by a right and left tilt mechanism 60. The lower slide mechanism 61 includes a pair of parallel slide bars 61 a spaced from each other in right and left directions. The slide bars 61 a are supported on the rear portion of the table 2 such that the slide bars 61 a can slide in forward and rearward directions relative to the table 2. The right and left tilt mechanism 60 is mounted to the rear ends of the slide bars 61a and enables the tool unit 10 to be tilted in right or left direction in order to perform an inclined cutting operation. The right and left tilt mechanism 60 includes a base portion 63 secured to the rear ends of the slide bars 61a and a support portion 65 connected to the base portion 63 via a support shaft 64, so that the support portion 65 can pivot in right and left directions about the support shaft 64. A fixing lever 66 is disposed at a rear portion of the support portion 65. Rotating the fixing lever 66 in a tightening direction can fix the pivoting position of the support portion 65 relative to the base portion 63. Therefore, the tool unit 10 can be fixed in position at an upright position or a leftward or rightward tilt position.

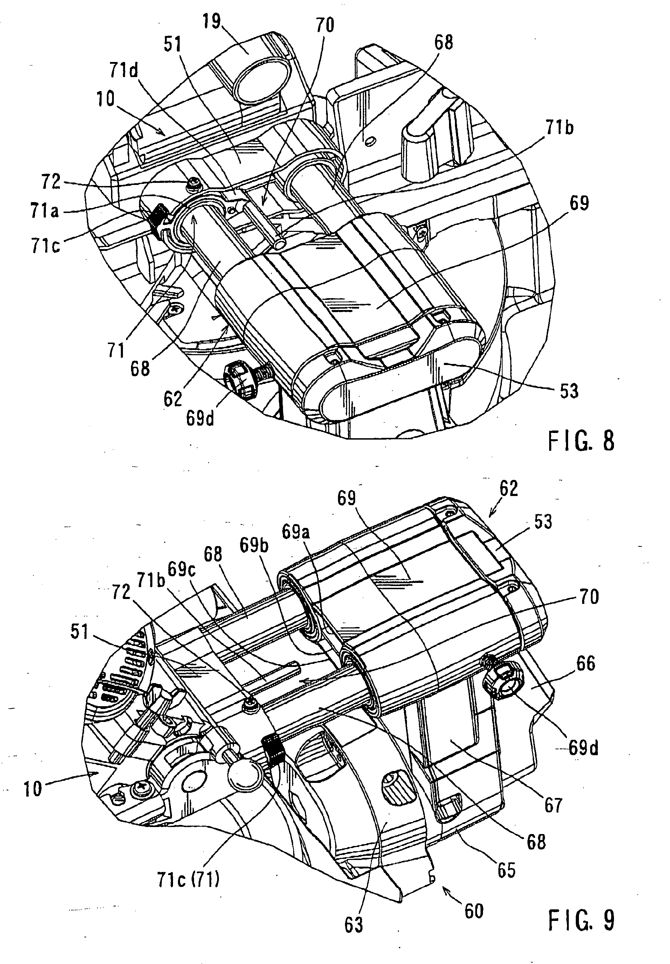

A support arm 67 extends upward from the upper portion of the support portion 65. The upper slide mechanism 62 is mounted to the upper portion of the support arm 67 and includes a pair of parallel slide bars 68 spaced from each other in right and left directions. The slide bars 68 are supported on an upper slide support 69 of the support am 67 such that the slide bars 68 can slide in forward and rearward directions relative to the support arm 67. The front ends of the slide bars 68 are joined to each other via a bracket 51. The tool unit 10 is supported on the bracket 51 via a pivotal shaft 52, so that the tool unit 10 can vertically pivot about the pivotal shaft 52. The rear ends of the slide bars 68 are joined to each other via a bracket 53. Therefore, the slide bars 68 can slide in forward and rearward directions in unison with each other while the slide bars 68 are kept in parallel to each other. As the slide bars 68 slide in a forward or rearward direction, the tool unit 10 moves in the same direction as the sliding movement of the slide bars 68. As shown in FIGS. 8 and 9, a fixing screw 69d is attached to one side of the slide support 69. By screwing the fixing screw 69d into the slide support 69, one of the slide bars 68 is fixed in position, and therefore, the other of the slide bars 68 is also fixed in position. As a result, the upper slide mechanism 62 is locked and the tool unit 10 cannot slide relative to the support arm 67. By loosening the fixing screw 69, the upper slide mechanism 62 is unlocked and the tool unit 10 is permitted to slide in forward and rearward directions.

Because of the incorporation of the upper and lower slide mechanisms 61 and 62 and the right and left tilt mechanism 60, the tool unit 10 can move in forward and rearward directions by a large distance, while the tool unit 10 can tilt in right and left directions independently of the sliding movement. Similar to the first embodiment, the link arm 14 is interleaved between the movable cover 13 and the bracket 51, so that the movable cover 13 is opened and closed in response to the vertically tilting movement of the tool unit 1.

The intermediate stopper mechanism 70 is incorporated into the upper slide mechanism 62 and is operable to stop the rearward movement of the tool unit 10 at an intermediate position within a slidable range of the tool unit 10. The details of the intermediate stopper mechanism 70 is shown in FIGS. 8 and 9. As shown in these figures, the intermediate stopper mechanism 70 includes a stopper member 71 attached to one of the upper slide bars 68. The stopper member 71 includes an annular support 71a, a stopper rod 71b and an operation lever 71c. The annular support 71a is configured to receive one of the upper slide bars 68 such that the one of the upper slide bears 68 can smoothly rotate relative to the annular support 71a. The stopper rod 71b and the operation lever 71c are fixedly attached to or formed integrally with the outer circumference of the annular support 71a.

The annular support 71a of the stopper member 71 is received within the inner circumference of the bracket 51 such that the annular support 71a can rotated within a predetermined angular range about the one of the upper slide bars 68. A mounting screw 72 is screwed into the upper portion of the bracket 51 and can engage the annular support 71a in order to prevent the annular support 71a from moving in an axial direction along the corresponding upper slide bar 68 while permitting the annular support 71a to rotate about the corresponding upper slide bar 68 within a predetermined range.

An arm 71d extends radially outward from the annular support 71a. The stopper rod 71 b extends rearwardly from the arm 71d in a direction parallel to the corresponding upper slide bar 68. Also, the operation lever 71c extends radially outward from the annular support 71a, so that the annular support 71a is rotated within the predetermined range by the operation of the operation lever 71c. At the same time, the stopper rod 71 b rotates to shift its vertical position within a predetermined range.

As the tool unit 10 slides rearward, the stopper rod 71b moves rearward together with the tool unit 10. Then, the rear end of the stopper rod 71 b contacts an intermediate rib 69a of the upper slide support 69, so that the rearward movement of the tool unit 10 is stopped at an intermediate position within the slidable range of the tool unit 10 enabled by the upper slide mechanism 62. As shown in FIG 9, the front portion of the upper slide support 69 includes an upper rib 69a, the intermediate rib 69b and a lower rib 69c that extend parallel to each other and are spaced equally from each other.

When the tool unit 10 is moved rearward with the operation lever 71c positioned at a lock position (lower position in this embodiment), the stopper rod 71b contacts the front end of the intermediate rib 69b, so that the rearward movement of the tool unit 10 is stopped. Therefore, it is possible to stop the tool unit 10 at the intermediate position within the slidable range of the tool unit 10. When the operation lever 71c is operated to rotate to an unlock position (upper position in this embodiment), the stopper rod 71 b moves downward. Therefore, when the tool unit 10 is moved rearward with the operation lever 71c positioned at the unlock position, the stopper rod 71b enters into a space between the intermediate rib 69b and the lower rib 69c, so that the tool unit 10 can move further without being stopped. Hence, the tool unit 10 can move to a rear stroke end of the slidable range enabled by the upper slide mechanism 62.

Similar to the first embodiment, the body case 11 has the support arm 11a and the fixed cover 11b that covers substantially the upper half of the cutting tool 12. The cutting tool 12 is mounted to the spindle 16 that is rotatably supported by the lower end of the fixed cover 11b at a substantially central position with respect to forward and rearward directions. The rear part 11c of the lower end portion of the fixed cover 11b on the rear side of the spindle 16 is recessed upward by the distance L0 relative to the front part 11d of the lower end portion.

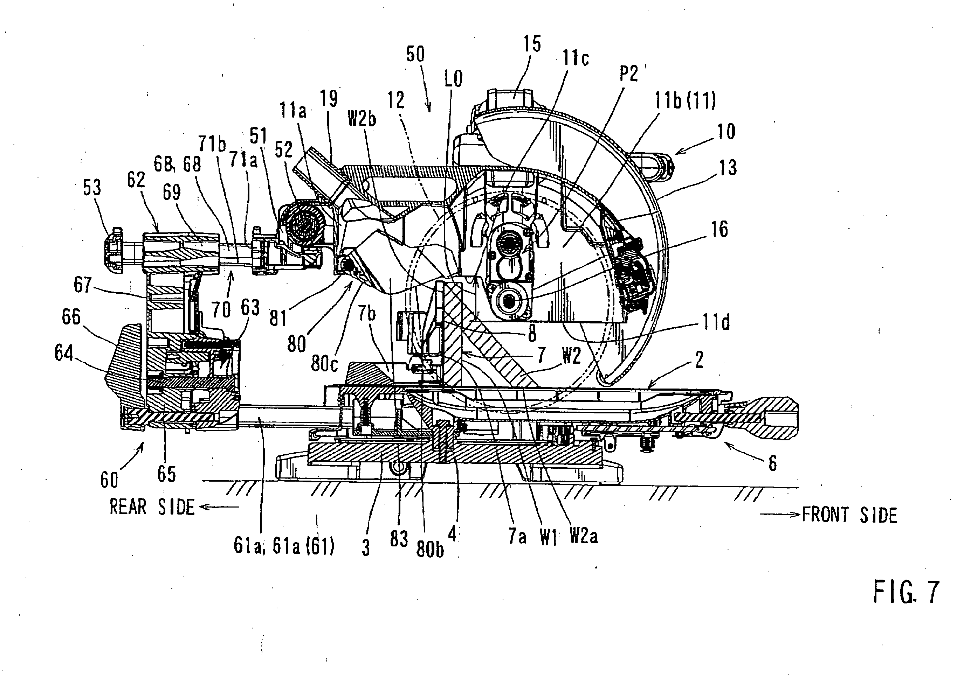

As shown in FIG. 7, when the tool unit 10 has been tilted downward, the fence 7 is positioned below the rear part 11c. Because the rear part 11c is recessed upward relative to the front part 11d by the distance L0, the rear part 11c does not interact with the fence 7 when the tool unit 10 has moved to its lower stroke end, even in the case that the auxiliary fences 8 are attached to the fence 7 for increasing the height of the positioning surfaces 7a. This operation is the same as the first embodiment. The recessed rear part 11c also may be called "relief part 11c" in this specification. By the provision of the relief part 11c, it is possible to increase an exposable range in the vertical direction (i.e., maximum cutting depth) of the cutting tool 12 that is exposed from its rear side as the downward tilting movement of the tool unit 10.

With the proviso of the relief part in the fixed cover 11b, it may be possible that a part of the peripheral portion (cutting edge) of the cutting tool 12 opposing to the relief part 11c is not covered by the fixed cover 11 and the movable cover 13 when the tool unit 10 has moved upward and the movable cover 13 has moved to a fully closing position. In this embodiment, the auxiliary cover 80 can cover such a part of the peripheral portion (cutting edge) of the cutting tool 12, which is not covered by the fixed cover 11 and the movable cover 13. The auxiliary cover 80 is supported within the fixed cover 11b. The rear portion of the auxiliary cover 80 is supported by the fixed cover 11b via a support rod 81, so that the auxiliary cover 80 can pivot about the support rod 81. A torsion spring is interleaved between the auxiliary cover 80 and the fixed cover 11b, so that the auxiliary cover 80 is biased in a downward direction (closing direction or a direction in a clockwise direction as viewed in FIG. 7).

The auxiliary cover 80 has a pair of right and left shields 83 that are configured to receive the cutting tool 12 between the front ends thereof. The shields 83 are joined to each other at two positions including an intermediate position and a position proximal to the rear ends in the lengthwise direction, so that the shields 83 extend parallel to each other. A dust collecting channel is defined between the rear ends of the shields 83. The upper end of the collecting channel is oriented toward a dust collecting port 19 of the tool unit 10 during the cutting operation performed with the tool unit 10 tilted downward as shown in FIG 7. In this way, the auxiliary cover 80 also serves to guide cutting chips, which may be produced during the cutting operation, toward the dust collecting port 19.

The lower potion of the auxiliary cover 80 is configured to have a V-shaped configuration and has an apex oriented downward. The lower end of the auxiliary cover 80 includes a front part 80b and a rear part 80c positioned on the front side and the rear side of the apex, respectively. Each of the front part 80b and the rear part 80c defines a flat edge surface and extends linearly. The front part 80b and the rear part 80c intersect with each other at the apex by an obtuse angle.

As shown in FIG. 4, in the state where the tool unit 10 is positioned its uppermost stroke end, the auxiliary cover 80 is closed and is positioned at its lowermost stroke end. More specifically, the lowermost stroke end of the auxiliary cover 80 is determined such that the rear part 80c of the lower end of the auxiliary cover 80 extends substantially parallel to the upper surface of the table 2 when the auxiliary cover 80 is positioned at the lowermost end. On the other hand, the front part 80b of the lower end of the auxiliary cover 80 is positioned within the movable cover 13 and extends substantially along an edge with respect to the circumferential direction of the safety cover 80. Therefore, the entire periphery of the cutting tool 12 can be completely covered by the fixed cover 11b, the movable cover 13 and the auxiliary cover 80 without leaving any gap.

Further in the state where the auxiliary cover 80 is in the closing position, the front part 80b extends substantially parallel to the rear part 11c of the lower end portion of the fixed cover 11b.

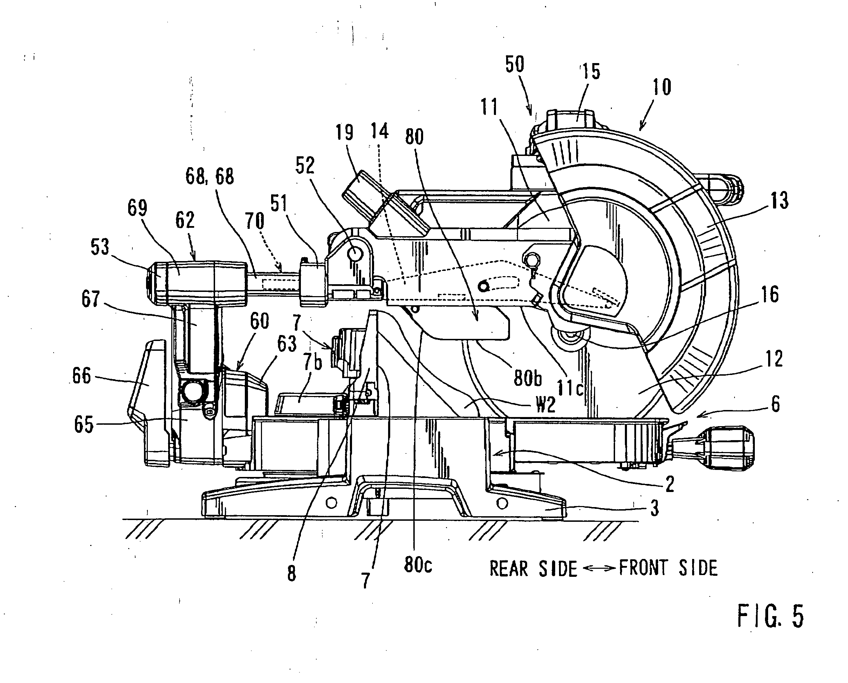

It should be noted that the auxiliary cover 80 does not move in response to the vertically tilting movement of the tool unit 10 and is held in the closing position during the entire vertical stroke movement of the tool unit 10. Thus, even in the event that the tool unit 10 has moved to the lower stroke end and the cover 13 has been fully opened as shown in FIG. 5, the auxiliary cover 80 is held at the closing position by the torsion spring.

In operation, the tool unit 10 is slid to a frontmost position by the operations of the upper and lower slide mechanisms 61 and 62 and is then tilted downward to reach a position proximal to the lower stroke end as shown in FIG. 5. Thereafter, the tool unit 10 is slid rearward by the operations of the upper and lower slide mechanisms 61 and 62, so that the cutting tool 12 cuts into the workpiece W2 placed on the table 2.

As the tool unit 10 slides rearward to further cut the workpiece W2. During this sliding movement of the tool unit 10, the rear part 80c of the lower end portion of the auxiliary cover 80 may contact the workpiece W2 or the fence 7 (or the auxiliary fences 8). As the tool unit 10 further slides rearward, the auxiliary cover 80 is forced to move upward through contact with the workpiece W2 or the fence 7 (or the auxiliary fences 8), so that the auxiliary cover 80 is opened. As described previously, when the auxiliary cover 80 is in the closing position, the front part 80b of the lower end portion of the auxiliary cover 80 extends substantially parallel to the upper surface of the table 2. In other words, the front part 80b of the lower end portion of the auxiliary cover 80 extends substantially in a horizontal direction when the auxiliary cover 80 is in the closing position. Therefore, the rear part 80c is positioned to incline upward in the reward direction. Hence, the rear part 80c can serve as a guide surface that enables a smooth movement in the opening direction of the auxiliary cover 80 during the rearward sliding movement of the tool unit 10.

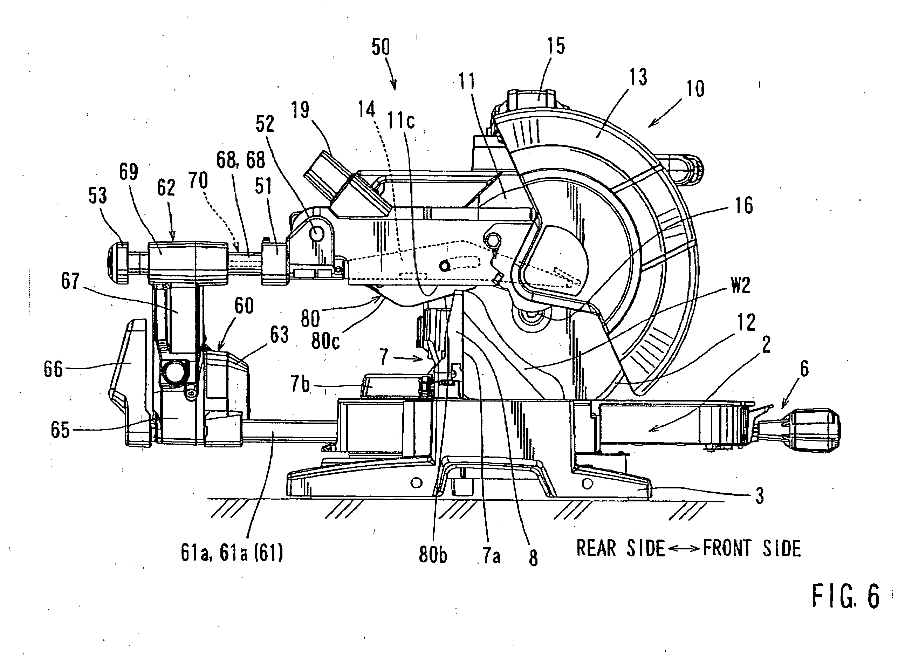

When the operation lever 71c of the intermediate stopper mechanism 70 is operated to be moved to the lock position, the rearward sliding movement of the tool unit 10 is stopped at the intermediate position. This situation is shown in FIGS. 6 and 7. As will be seen from these figures, stopping the tool unit 10 at the intermediate position through contact between the stopper rod 71 b and the intermediate rib 69b during the rearward sliding movement may prevent potential interaction of the fixed cover 11b with the workpiece W2 after the work piece W2 has been completely cut.

More preferably, the intermediate position is determined to be a position where the peripheral edge (cutting edge) of the cutting tool 12 passes through a line of intersection between a plane of the positioning surfaces 7a of the fence 7 and the upper surface of the table 3. With this determination, in addition to the case of the cutting operation of the workpiece W2 fixed in an inclined position between the fence 7 and the table 2, it is possible to achieve the above advantages, without leaving an uncut part, also in the case of the cutting operation of the workpiece W1 fixed in an upright position along the positioning surfaces 7a of the fence 7.

Further, as the tool unit 10 is slid rearward and is then stopped at the intermediate position, the apex of the auxiliary cover 80 passes over the fence 7 from its front side toward the rear side and is stopped in the state where the front part 80b of the lower end portion of the auxiliary cover 80 is get on the upper end of the fence 7. Therefore, the entire auxiliary cover 80 may not move reawardly beyond the fence 7. With this arrangement, when the tool unit 10 is slid forwadly to return to the initial position after the cutting operation, the auxiliary cover 80 is pressed against the backside of the fence 7, and therefore, it is possible to avoid interference by the fence 7 against the forward sliding movement of the tool unit 10.

On the other hand, if the operation lever 71c of the intermediate stopper mechanism 70 is rotated to the unlock position, the tool unit 10 can be moved rearwardly to the rearmost stroke end enabled by the operations of the upper and lower slide mechanisms 61 and 62. In this case, the cutting edge of the cutting tool 12 may pass through a position spaced downwardly by a large distance from the line of intersection between the plane of the positioning surfaces 7a of the fence 7 and the upper surface of the table 3. Therefore, it would be necessary to shift the downward stroke end of the tool unit 10 by adjusting a stopper that limits the downward stroke end of the tool unit 10. With this adjustment, it is possible to perform a cutting operation of a workpiece having a large height.

According to the cutting device 50 of the second embodiment, similar to the first embodiment, it is possible to ensure a large cutting depth of the cutting tool 12 by the relief part 11c provided at the fixed cover 11b at a position on the rear side of the center of rotation of the cutting tool 12. In addition, according to the second embodiment, the auxiliary cover 80 is provided in conjunction with the relief part 11c and the intermediate stopper mechanism 70 is provided in order to limit the moving distance of the fence 7 relative to the auxiliary cover 80.

Thus, by the incorporation of the auxiliary cover 80, it is possible to substantially completely cover the rear portion of the cutting tool 12, which may not be covered by the fixed cover 11b and the movable cover 13 due to the provision of the relief part 11c of the fixed cover 11b.

Further, due to the relief part 11c at the fixed cover 11b, in some cases, a part of the lower end portion of the fixed cover 11b positioned around the spindle 16 may interact with the workpiece W1 or W2 when the tool unit 10 is slid to the rear stroke end enabled by the upper and lower slide mechanisms 61 and 62. However, the problem of this interaction can be avoided by limiting the rear stroke end by the intermediate stopper mechanism 70.

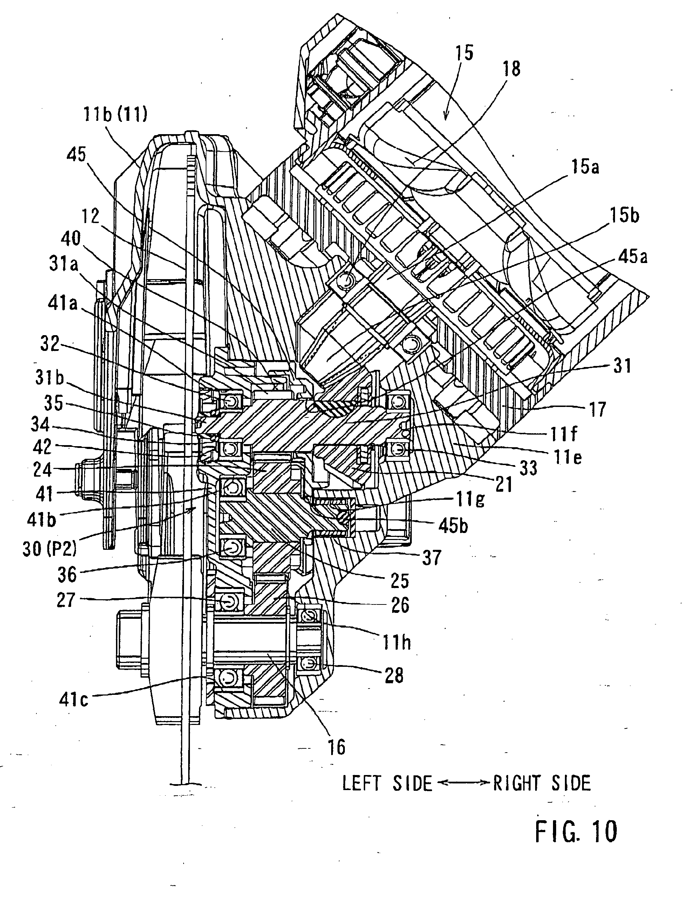

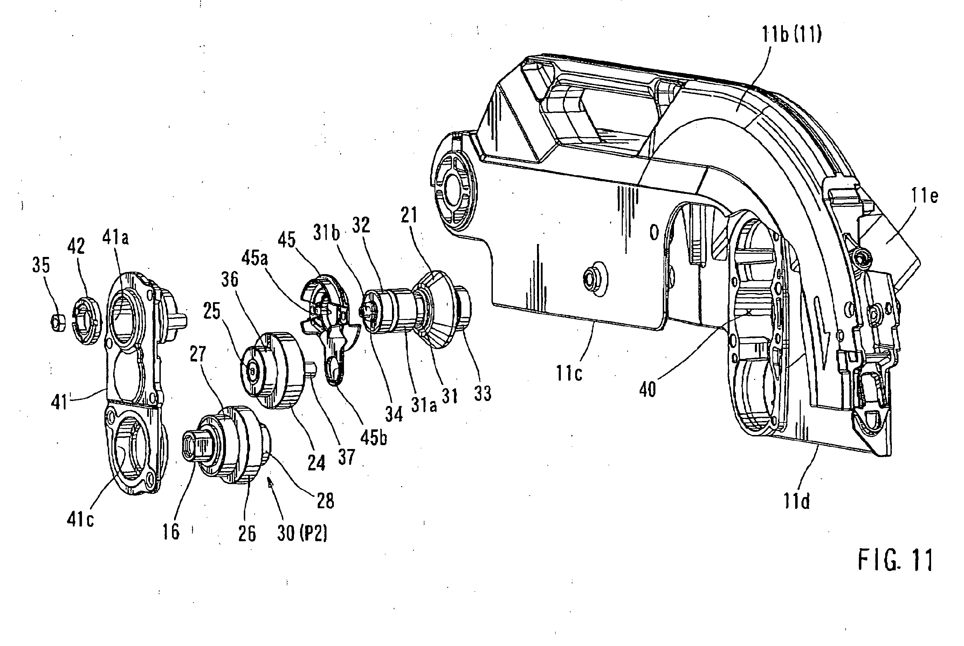

A third embodiment of the present invention will now be described with reference to FIGS. 10 and 11. This embodiment is a modification of the first embodiment and includes a drive system P2 that has the electric motor 15 as a drive source for driving the cutting tool 12. This drive system P2 is configured differently from the drive system P1 of the first embodiment shown in FIG 3. The details of the drive system P2 are shown in FIGS. 10 and 11. Also in the drive system P2, the rotation of the motor 15 is reduced before it is transmitted to the spindle. In FIGS. 11 and 12, like members are given the same reference signs as the drive system P1 and the description of these members will not be repeated.

As shown in FIGS. 11 and 12, a motor base 11e is formed integrally with the backside (right side as viewed in the figures) of the fixed cover 11e. The motor 15 is mounted to the motor base 11e via bracket 17. Similar to the drive system P1 of the first embodiment, the motor 15 is positioned in such a manner that the output shaft 15a of the motor 15 is oriented downwardly and is inclined by an angle of 45° relative to the vertical direction. Therefore, the rear portion of the electric motor 15 is oriented upward.

The output shaft 15a of the motor 15 is rotatably supported by the motor base 11e via a bearing 18 and extends into a gear chamber 40. The gear chamber 40 is configured as a recess (bearing box) formed inside of the fixed cover 11b and is closed by a gear chamber cover 41. A reduction gear mechanism (gear train) 30 is disposed within the gear chamber 40. The rotation of the motor 15 is reduced by a plural number of reduction stages of the reduction gear mechanism 30 and is thereafter transmitted to the spindle 16.

The drive gear 15b is formed with the output shaft 15a of the motor 15. In this embodiment, the drive gear 15b is a spiral bevel gear that has a plurality of teeth formed on a conical surface and each having a configuration twisted and curved along its length. The drive gear 15 is in engagement with the driven gear 21. In this embodiment, in correspondence with the drive gear 15, the driven gear 21 is also a spiral bevel gear that has a plurality of teeth formed on a conical surface and each having a configuration twisted and curved along its length. The driven gear 21 is fixedly mounted to a right side portion of a first intermediate shaft 31. A first intermediate gear 31 a is formed integrally with a left side portion of the first intermediate shaft 31. In this embodiment, a spur gear having a plurality of teeth extending parallel to the rotational axis is used as the first intermediate gear 31a. However, it is possible to use a helical gear as the first intermediate gear 31 a.

The first intermediate gear 31 is rotatably supported by bearings 32 and 33. In this embodiment, a ball bearing having an inner race, an outer race and a plurality of balls positioned between the inner race and the outer race is used for each of the bearings 32 and 33. The bearing 32 positioned on the left side as viewed in FIG 10 is mounted within a recess 41a formed in the outer side surface of the gear chamber cover 41 (i.e., the outer side of the gear chamber 40). The left end of the first intermediate shaft 31 extends beyond the bearing 32 and has a threaded shaft portion 31 b. A fixing nut 35 is threadably engaged with the threaded shaft portion 31b and a washer 34 is interleaved between the fixing nut 35 and the bearing 32. Therefore, as the fixing nut 35 is tightened, the inner race of the bearing 32 is clamped between the washer 34 and a stepped portion formed on the first intermediate shaft 31, so that the bearing 32 can be fixed in position with respect to the axial direction relative to the first intermediate shaft 31.

The outer race of the bearing 32 is in contact with the bottom of the recess 41a. A bearing nut 42 is threadably engaged with an internal thread formed on the inner circumference of an inlet portion of the recess 41 a, so that the outer race of the bearing 32 is clamped between the bearing nut 42 and the bottom of the recess 41a. With this arrangement, the bearing 32 is fixed in position with respect to the axial direction relative to the gear chamber cover 41. As a result, the first intermediate shaft 31 is fixed in position with respect to the axial direction relative to the gear chamber cover 41.

The bearing 33 positioned on the right side as viewed in FIG 10 is mounted within a recess 11f formed in the right side wall of the gear chamber 40. The outer race of the bearing 33 is in contact with the bottom of the recess 11f. The inner race of the bearing 33 is in contact with another stepped portion formed on the first intermediate shaft 31. With this arrangement, the first intermediate shaft 31 is rotatably supported within the motor base 11e, while the rightward movement of the first intermediate shaft 31 along the axial direction is firmly reliably prevented. Therefore, it is possible to reliably resist against a thrust force that may be applied rightwardly along the axial direction by the engagement between the drive gear 15b of the motor 15 and the driven gear 21. Hence, the thrust force is received by the motor base 11e.

The first intermediate gear 31a is in engagement with the second intermediate gear 24. The second intermediate gear 24 is fixedly mounted to the second intermediate shaft 25. The second intermediate shaft 25 extends in parallel to the first intermediate shaft 31 and is rotatably supported by bearings 36 and 37. In this embodiment, a ball bearing having an inner race, an outer race and a plurality of balls positioned between the inner race and the outer race is used for the bearing 36 positioned on the left side as viewed in FIG 10. The bearing 36 is mounted within a recess 41b formed in the inner surface of the gear chamber cover 41 (i.e., within the gear chamber 40). A needle bearing is used as the bearing 37 positioned on the right side as viewed in FIG 10 in order to permit axial movement of the second intermediate shaft 25. The bearing 37 is mounted within a recess 11g formed in the right side wall of the gear chamber 40.

The second intermediate gear 24 is in engagement with the output gear 26 fixedly mounted to the spindle 16. Therefore, the second intermediate gear 24 is in engagement with both of the output gear 26 and the first intermediate gear 31a. This means that the second intermediate gear 24 serves as an idle gear and does not serve as a reduction gear. Therefore, the speed reduction ratio is the same as the case where the first intermediate gear 31 a directly engages the output gear 26. A spur gear is used for each of the second intermediate gear 24 and the output gear 26. The spindle 16 is rotatably supported by the bearings 27 and 28 and extends parallel to the first and second intermediate shafts 31 and 25. The bearing 27 positioned on the left side as viewed in FIG. 10 is mounted within a recess 41c formed in the outer surface of the gear chamber cover 41. The bearing 28 positioned on the right side as viewed in FIG 10 is mounted within a recess 11h formed in the right side wall of the gear chamber 40. The spindle 16 extends from the left side bearing 27 into inside of the fixed cover 11b. The cutting tool 12 is mounted to the spindle 16 at a position within the fixed cover 11b.

In order to lubricate the reduction gear mechanism 30, grease (lubricating oil) is sealingly contained within the gear chamber 40 that is defined between the motor base 11e and the gear chamber cover 41. The gear chamber 40 is divided into a right side (drive side) chamber and a left side (driven side) chamber by a partition wall 45. An upper insertion hole 45a and a lower insertion hole 45b are formed in the partition wall 45. The first intermediate shaft 31 is inserted through the upper insertion hole 45a, so that the driven gear 21 positioned within the right side chamber and the first intermediate gear 31a is positioned with the left side chamber. In this way, the driven gear 21 and the first intermediate gear 31a are separated from each other by the partition wall 45. The rear portion of the second intermediate shaft 25 is inserted through the lower insertion hole 45b. The partition wall 45 prevents the sealed grease from flowing from the right side chamber (drive side chamber) to the left side chamber (driven side chamber). Therefore, the grease lubricating the drive gear 15b and the driven gear 21 may not flow downward toward the lower region of the gear chamber 40 (i.e, the side of the spindle 16). Hence, it is possible to properly maintain a lubricating condition of the drive gear 15 and the driven gear 21.

In particular, according to this embodiment, spiral bevel gears are used as the drive gear 15b and the driven gear 21 that engages the drive gear 15b. Therefore, the grease tends to accumulate on a particular point within the gear chamber 40 as the drive gear 15b and the driven gear 21 rotate. However, because the gear chamber 40 is divided into the side of the drive gear 15b and the driven gear 21 (i.e., the side of spiral bevel gears) and the side of the first to third intermediate gears 31a, 24 and 26 (i.e., the side of spur gears or helical gears), the grease is prevented from transferring between these sides. Therefore, a necessary amount of the grease can be properly maintained on the side of spiral bevel gears. As a result, it is possible to improve the durability of these gears and to inhibit sounds that may be produced by engagement between these gears.

As described above, according to the drive system P2 in this embodiment, the rotation of the motor 15 is reduced in three stages and is then transmitted to the spindle 16. Therefore, a large distance can be ensured between the output shaft 15a and the spindle 16. Hence, the rear part or the relief part 11c of the lower end portion of the fixed cover 11b can be recessed by a large distance in the upward direction. This enables the fence 7 to have a large height, and therefore, it is possible to rapidly and accurately perform a cutting operation of a workpiece having a large width, such as a crown molding material, with the workpiece inclined and propped against the fence.

In addition, because the motor 15 is positioned in such a manner that the output shaft 15a is oriented downwardly and is inclined relative to the vertical direction. Therefore, it is possible to perform an inclined cutting operation by tilting the tool unit rightward by a large angle.

Further, according to the drive system P2 of this embodiment, the driven gear 21 engaging the drive gear 15a of the motor 15 is fixedly mounted to the first intermediate shaft 31 that is rotatable but is fixed in position with respect to the axial direction. Therefore, a thrust force (impact force) that may be repeatedly applied to the driven gear 21 as the motor 15 is started and stopped can be received mainly by the motor base 11e. Therefore, the mounting position of the driven gear 21 can be held in stable, sounds produced by engagement between the driven gear 21 and the drive gear 15a can be reduced, and the durability of these gears can be improved.

Furthermore, according to the drive system P2, the gear chamber 40 receiving therein the reduction gear mechanism 40 is divided into the upper chamber and the lower chamber by the partition wall 45 disposed in the midway of the power transmission path of the reduction gear mechanism 40. Therefore, it is possible to prevent insufficient lubrication of the upper chamber, which may be caused by the flow of the grease or lubricant from the upper chamber to the lower chamber.

Other than the use for the tool unit 10 of the cutting device 50, the drive system P2 of the above embodiment can also be used for a porcutting device. The porcutting device may include a base for placing on an upper surface of a workpiece, and a tool unit supported on an upper side of the base and having a rotary cutting tool partly extending downward from the base, so that the workpiece can be cut by the cutting tool as the base is slid together with the tool unit along the upper surface of the workpiece. Positioning an electric motor of the tool unit to be oriented downward and inclined relative to a vertical direction, and providing a reduction gear mechanism having a plurality of reduction stages can ensure a large cutting depth of the cutting tool and a large inclination angle of the tool unit when an inclined cutting operation is performed.

Further, although the partition wall 45 is configured as a separate member from the motor base 11e and the gear chamber cover 41 and is assembled within the gear chamber 40 in the above embodiment, the partition wall 45 may be formed integrally with the motor base 11e or the gear chamber cover 41.

## Claims

1. A cutting device (1; 50) comprising:
a table (2) having an upper surface for placing thereon a workpiece (W, W1, W2);
a positioning fence (7) operable to position the workpiece (W, W1, W2) on the upper surface of the table (2);
a tool unit (10) vertically movably supported on the table (2) and including an electric motor (15) as a drive source, a spindle (16) rotatably driven by the motor (15), a rotary cutting tool (12) mounted to the spindle (16) so that the rotational axis of the spindle (16) defines a rotational center (C) of the rotary tool (12), and a fixed cover (11b) configured to cover an upper portion of the cutting tool (12), and
a gear train (20; 30) configured to transmit rotation of the motor (15) to the spindle (16), wherein;
the fixed cover (11b) has a lower end portion including a front part (11d) positioned on a front side of an operator with respect to the spindle (16) and a rear part (11c) positioned on a rear side with respect to the spindle (16) so as to be able to oppose to the positioning fence (7) from an upper side;
the rear part (11c) of the lower end portion of the fixed cover (11b) is positioned at a higher level than the front part (11d) when the tool unit (10) is positioned a substantially lower movable end; and
the gear train (20; 30) includes a drive gear (15b) on the side of the motor (15), an output gear (26) on the side of the spindle (16), and an intermediate gear (23. 24; 31 a, 24) positioned between the drive gear (15b) and the output gear (26) and engaging the drive gear (15b) and the output gear (26),
**characterized in that**
the intermediate gear (24) is an idle gear, and
the motor (15) is mounted to the fixed cover (11b), so that an output shaft (15a) of the motor (15) is oriented downwardly and is inclined relative to a plane perpendicular to the rotational axis of the spindle (16) when the plane is parallel to the vertical direction.

2. The cutting device (50) as in claim 1, wherein the tool unit (10) is movable in a horizontal direction relative to the table (2) within a predetermined movable range, and the cutting device (50) further includes an intermediate stopper mechanism (70) operable to stop the horizontal movement of the tool unit (10) at a position where the peripheral edge of the cutting tool (12) is positioned proximal to the line of intersection between the positioning surface (7a) of the fence (7) and the upper surface of the table (2).

3. The cutting device (1; 50) as in claim 1 or 2, further comprising a movable cover (13) movable to cover and uncover a lower portion of the rotary cutting tool (12) in response to the vertical movement of the tool unit (10).

4. The cutting device (50) as in claim 3, further comprising an auxiliary cover (80) configured to cover a part of the cutting tool (12) that cannot be covered by the fixed cover (11b) and the movable cover (13).

5. The cutting device (1; 50) as in any one of the preceding claims, further comprising an auxiliary fence (8) attachable to the positioning fence (7) for increasing a height of a positioning surface (7a) of the positioning fence (7).

6. The cutting device (1; 50) as in any one of the preceding claims, wherein:
the gear train (20; 30) further includes a driven gear (21) positioned between the drive gear (15b) and the output gear (26), the driven gear (21) engaging the drive gear (15b), and the intermediate gear (23, 24; 31a, 24) receiving transmission of force from the driven gear (21) and engaging the output gear (26); and
each of the drive gear (15b) and the driven gear (21) comprises a bevel gear.

7. The cutting device (1; 50) as in any one of the preceding claims, wherein:
the fixed cover (11b) has a lower end portion including a rear part (11c) and a front part (11d) positioned on opposite sides with respect to rotational axis of the cutting tool (12);
when the tool unit (10) is positioned a substantially lowermost position, the rear part (11c) is positioned at a first level and vertically opposes to the fence (7), while the front part (11d) is positioned at a second level and does not oppose to the fence (7); and
the first level is higher than the second level.

8. The cutting device (50) as in any of the preceding claims, wherein the tool unit (10) is movable relative to the table (2) in a horizontal direction and further includes a stopper mechanism (70) for stopping the horizontal movement of the tool unit (10) at a position where the rear part (11c) vertically opposes to the fence (7) and the front part (11d) does not oppose to the fence (7) when the tool unit (10) is positioned a substantially lowermost position.

9. The cutting device (1; 50) as in any one of the preceding claims, wherein the tool unit (10) further includes:
an intermediate shaft (15b), wherein:
the electric motor (15) has the output shaft (15a) and the drive gear (15b) is rotatable (2) with the output shaft (15a);
the intermediate shaft (22; 31) has a driven gear (21) and the intermediate gear (23, 24; 31a, 24) each rotatable (2) with the intermediate shaft (22; 31), the driven gear (21) engages the drive gear (15b);
the spindle (16) has the output gear (26) rotatable (2) with the spindle (16) and receives transmission of power from the intermediate gear (23, 24; 31a, 24).

10. The cutting device (1; 50) as in any one of the preceding claims, further comprising an intermediate shaft (22) having the intermediate gear (23; 31a) mounted thereto and extending parallel to the spindle (16), wherein the intermediate shaft (22) is supported by the fixed cover (11b), so that the intermediate shaft (22; 31) can rotate about its axis and is prevented from moving along an axial direction.

11. The cutting device (1; 50) as in any one of the preceding claims, wherein:
one of a distance L1 in a vertical direction between a center of rotation of the rotary cutting tool (12) and the upper surface of the table (2) and a distance L2 in a horizontal direction between the center of rotation of the rotary cutting tool (12) and a positioning surface (7a) of the fence (7) is 81 mm and the other of the distance L1 and the distance L2 is 97 mm;
the tool unit (10) includes a fixed cover (11b) configured to cover an upper portion of the cutting tool (12); and
a distance L3 in the vertical direction between the rear part (11c) of the lower end portion of the fixed cover (11b) and the upper surface of the table (2) is equal to or more than 119 mm at a position on the front side of the positioning surface (7a) of the fence (7).

12. The cutting device (1; 50) as in any one of claims 1 to 10, wherein:
a distance in a vertical direction between the rear part (11c) of the lower end portion of the fixed cover (11b) and the upper surface of the table (2) is equal to or more than 119 mm when a peripheral edge of the cutting tool (12) is positioned proximal to a line of intersection between the positioning surface (7a) of the fence (7) and the upper surface of the table (2), while the tool unit (10) is positioned at its lower stroke end.

13. The cutting device (1; 50) as in claim 11 or 12, wherein the distance L3 and/or the vertical distance is between 119 mm and 145 mm.

14. The cutting device (1; 50) as in any one of the preceding claims, wherein the gear train (20; 30) includes a first intermediate gear (23; 31a) and a second intermediate gear (24).

## Patentansprüche

1. Schneidevorrichtung (1; 50), mit:
einem Tisch (2) mit einer Oberfläche zum darauf Platzieren eines Werkstückes (W, W1, W2);
einem Positionieranschlag (7), der zum Positionieren des Werkstücks (W, W1, W2) auf der Oberfläche des Tisches (2) betätigbar ist;
einer Werkzeugeinheit (10), die auf dem Tisch (2) vertikal beweglich gehalten wird und einen Elektromotor (15) als eine Antriebsquelle, eine Spindel (16), die durch den Motor (15) drehbar angetrieben wird, ein sich drehendes Schneidewerkzeug (12), das an der Spindel (16) so angebracht ist, dass die Drehachse der Spindel (16) eine Drehmitte (C) des sich drehenden Werkzeugs (12) definiert, und eine fixierte Abdeckung (11b), die zum Abdecken eines oberen Bereichs des Schneidewerkzeugs (12) ausgebildet ist, aufweist, und
einem Getriebezug (20; 30), der zum Übertragen einer Drehung des Motors (15) auf die Spindel (16) ausgebildet ist, bei der;
die fixierte Abdeckung (11b) einen unteren Endbereich mit einem Vorderteil (11d), der auf einer Vorderseite eines Bedieners bezüglich der Spindel (16) angeordnet ist, und einem Hinterteil (11c), der auf einer Hinterseite bezüglich der Spindel (16) so angeordnet ist, dass er dem Positionieranschlag (7) von einer Oberseite gegenüberliegen kann, aufweist;
der Hinterteil (11c) des unteren Endbereichs der fixierten Abdeckung (11b) in einem höheren Niveau angeordnet ist als der Vorderteil (11d), wenn die Werkzeugeinheit (10) an einem im Wesentlichen unteren beweglichen Ende positioniert ist; und
der Getriebezug (20; 30) ein Antriebsrad (15b) auf der Seite des Motors (15), ein Ausgangsrad (26) auf der Seite der Spindel (16) und ein Zwischenrad (23, 24; 31a, 24), das zwischen dem Antriebsrad (15b) und dem Ausgangsrad (26) angeordnet ist und in das Antriebsrad (15b) und das Ausgangsrad (26) eingreift, aufweist,
**dadurch gekennzeichnet, dass**
das Zwischenrad (24) ein Leerlaufrad ist, und
der Motor (15) an der fixierten Abdeckung (11b) befestigt ist, sodass eine Ausgangswelle (15a) des Motors (15) nach unten gerichtet orientiert ist und relativ zu einer Ebene senkrecht zu der Drehachse der Spindel (16) geneigt ist, wenn die Ebene parallel zu der Vertikalrichtung ist.

2. Schneidevorrichtung (50) nach Anspruch 1, bei der die Werkzeugeinheit (10) in einer Horizontalrichtung relativ zu dem Tisch (2) in einem vorbestimmten Bewegungsbereich beweglich ist und die Schneidevorrichtung (50) weiter einen Zwischenstoppermechanismus (70) aufweist, der zum Abstoppen der horizontalen Bewegung der Werkzeugeinheit (10) an einer Position, in der die Umfangskante des Schneidewerkzeugs (12) nächstgelegen zu der Schnittlinie zwischen der Positionierfläche (7a) des Anschlags (7) und der Oberfläche des Tisches (2) angeordnet ist, betätigbar ist.

3. Schneidevorrichtung (1; 50) nach Anspruch 1 oder 2, die weiter eine bewegliche Abdeckung (13), die zum Abdecken und Freilegen eines unteren Bereichs des sich drehenden Schneidewerkzeugs (12) in Reaktion auf die Vertikalbewegung der Werkzeugeinheit (10) beweglich ist, aufweist.

4. Schneidevorrichtung (50) nach Anspruch 3, die weiter eine Hilfsabdeckung (80) aufweist, die zum Abdecken eines Teils des Schneidewerkzeugs (12) ausgebildet ist, der nicht durch die fixierte Abdeckung (11b) und die bewegliche Abdeckung (13) abgedeckt werden kann.

5. Schneidevorrichtung (1; 50) nach einem der vorhergehenden Ansprüche, die weiter einen Hilfsanschlag (8) aufweist, der an dem Positionieranschlag (7) zum Erhöhen einer Höhe einer Positionierfläche (7a) des Positionieranschlags (7) anbringbar ist.

6. Schneidevorrichtung (1; 50) nach einem der vorhergehenden Ansprüche, bei der:
der Getriebezug (20; 30) weiter ein angetriebenes Rad (21), das zwischen dem Antriebsrad (15b) und dem Ausgangsrad (26) angeordnet ist, aufweist, wobei das angetriebene Rad (21) mit dem Antriebsrad (15b) im Eingriff ist und das Zwischenrad (23, 24; 31a, 24) eine Kraftübertragung von dem angetriebenen Rad (21) empfängt und mit dem Ausgangsrad (26) im Eingriff ist; und
sowohl das Antriebsrad (15b) als auch das angetriebene Rad (21) ein Kegelrad aufweisen.

7. Schneidevorrichtung (1; 50) nach einem der vorhergehenden Ansprüche, bei der:
die fixierte Abdeckung (11b) einen unteren Endbereich, der einen Hinterteil (11c) und einen Vorderteil (11d) aufweist, die auf die entgegengesetzten Seiten bezüglich der Drehachse des Schneidewerkzeugs (12) angeordnet sind, aufweist;
wenn die Steuereinheit (10) in einer im Wesentlichen untersten Position angeordnet ist, der Hinterteil (11c) in einem ersten Niveau angeordnet ist und dem Anschlag (7) vertikal gegenüberliegt, während der Vorderteil (11d) in einem zweiten Niveau angeordnet ist und dem Anschlag (7) nicht gegenüberliegt; und
das erste Niveau höher als das zweite Niveau ist.

8. Schneidevorrichtung (50) nach einem der vorhergehenden Ansprüche, bei der die Werkzeugeinheit (10) relativ zu dem Tisch (2) in einer Horizontalrichtung beweglich ist und weiter einen Stoppermechanismus (70) zum Anhalten der horizontalen Bewegung der Werkzeugeinheit (10) an einer Position, an der der Hinterteil (11c) dem Anschlag (7) vertikal gegenüberliegt und der Vorderteil (11d) dem Anschlag (7) nicht gegenüberliegt, wenn die Werkzeugeinheit (10) an einer im Wesentlichen untersten Position angeordnet ist, aufweist.

9. Schneidevorrichtung (1; 50) nach einem der vorhergehenden Ansprüche, bei der die Werkzeugeinheit (10) weiter aufweist:
eine Zwischenwelle (15b), bei der:
der Elektromotor (15) die Ausgangswelle (15a) aufweist und das Antriebsrad (15b) mit der Ausgangswelle (15a) drehbar (2) ist;
die Zwischenwelle (22; 31) ein angetriebenes Rad (21) und das Zwischenrad (23, 24; 31 a, 24) aufweist, die beide mit der Zwischenwelle (22; 31) drehbar (2) sind, wobei das angetriebene Rad (21) mit dem Antriebsrad (15b) im Eingriff ist;
die Spindel (16) das Ausgangsrad (26) aufweist, das mit der Spindel (16) drehbar (2) ist, und eine Leistungsübertragung von dem Zwischenrad (23, 24; 31 a, 24) empfängt.

10. Schneidevorrichtung (1; 50) nach einem der vorhergehenden Ansprüche, weiter aufweisend eine Zwischenwelle (22), die ein Zwischenrad (23; 31a), das an ihr befestigt ist, aufweist und sich parallel zu der Spindel (16) erstreckt, wobei die Zwischenwelle (22) von der fixierten Abdeckung (11b) abgestützt wird, sodass die Zwischenwelle (22; 31) sich um ihre Achse drehen kann und daran gehindert wird, sich entlang einer Axialrichtung zu bewegen.

11. Schneidevorrichtung (1; 50) nach einem der vorhergehenden Ansprüche, bei der:
einer aus einem Abstand L1 in einer Vertikalrichtung zwischen einer Drehmitte des sich drehenden Schneidewerkzeugs (12) und der Oberfläche des Tisches (2) und einem Abstand L2 in einer Horizontalrichtung zwischen der Drehmitte des sich drehenden Schneidewerkzeugs (12) und einer Positionierfläche (7a) des Anschlags (7) 81 mm ist und der andere aus dem Abstand L1 und dem Abstand L2 97 mm ist;
die Werkzeugeinheit (10) eine fixierte Abdeckung (11b) aufweist, die zum Abdecken eines oberen Bereichs des Schneidewerkzeugs (12) ausgebildet ist; und
ein Abstand L3 in der Vertikalrichtung zwischen dem Hinterteil (11c) des unteren Endbereichs der fixierten Abdeckung (11b) und der Oberfläche des Tisches (2) gleich zu oder mehr als 119 mm an einer Position auf der Vorderseite der Abstützfläche (7a) des Anschlags (7) ist.

12. Schneidevorrichtung (1; 50) nach einem der vorhergehenden Ansprüche 1 bis 10, bei der:
ein Abstand in einer Vertikalrichtung zwischen dem Hinterteil (11c) des unteren Endbereichs der fixierten Abdeckung (11b) und der Oberfläche des Tisches (2) gleich zu oder mehr als 119 mm ist, wenn eine Umfangskante des Schneidewerkzeugs (12) nächstgelegen zu einer Schnittlinie zwischen der Positionierfläche (7a) des Anschlags (7) und der Oberfläche des Tisches (2) angeordnet ist, während die Werkzeugeinheit (10) an ihrem unteren Hubende angeordnet ist.

13. Schneidevorrichtung (1; 50) nach Anspruch 11 oder 12, bei der der Abstand L3 und/oder der Vertikalabstand zwischen 119 mm und 145 mm ist.

14. Schneidevorrichtung (1; 50) nach einem der vorhergehenden Ansprüche, bei der der Getriebezug (20; 30) ein erstes Zwischenrad (23; 31a) und ein zweites Zwischenrad (24) aufweist.

## Revendications

1. Dispositif de découpe (1 ; 50) comprenant :
une table (2) présentant une surface supérieure pour placer une pièce à découper (W, W1, W2) sur celle-ci ;
un guide de positionnement (7) permettant de positionner la pièce à découper (W, W1, W2) sur la surface supérieure de la table (2) ;
une unité d'outil (10) soutenue verticalement et de manière mobile sur la table (2) et comprenant un moteur électrique (15) comme source d'entraînement, une broche (16) entraînée en rotation par le moteur (15), un outil de découpe rotatif (12) monté sur la broche (16) de sorte que l'axe de rotation de la broche (16) définisse un centre de rotation (C) de l'outil rotatif (12), et un capot fixe (11 b) configuré pour couvrir une partie supérieure de l'outil de découpe (12), et
un train d'engrenages (20 ; 30) configuré pour transmettre la rotation du moteur (15) à la broche (16), dans lequel ;
le capot fixe (11b) présente une partie d'extrémité inférieure comprenant une partie avant (11d) positionnée sur un côté avant d'un opérateur par rapport à la broche (16) et une partie arrière (11c) positionnée sur un côté arrière par rapport à la broche (16) afin de pouvoir se placer face au guide de positionnement (7) à partir d'un côté supérieur ;
la partie arrière (11 c) de la partie d'extrémité inférieure du capot fixe (11 b) est positionnée à un niveau supérieur à celui de la partie avant (11d) lorsque l'unité d'outil (10) est positionnée à une extrémité mobile sensiblement inférieure ; et
le train d'engrenages (20 ; 30) comprend un engrenage d'entraînement (15b) sur le côté du moteur (15), un engrenage de sortie (26) sur le côté de la broche (16), et un engrenage intermédiaire (23, 24 ; 31 a, 24) positionné entre l'engrenage d'entraînement (15b) et l'engrenage de sortie (26) et venant en prise avec l'engrenage d'entraînement (15b) et l'engrenage de sortie (26),
**caractérisé en ce que**
l'engrenage intermédiaire (24) est un engrenage libre, et
le moteur (15) est monté sur le capot fixe (11 b), de sorte qu'un arbre de sortie (15a) du moteur (15) soit orienté vers le bas et soit incliné par rapport à un plan perpendiculaire à l'axe de rotation de la broche (16) lorsque le plan est parallèle au sens vertical.

2. Dispositif de découpe (50) selon la revendication 1, dans lequel l'unité d'outil (10) peut se déplacer dans un sens horizontal par rapport à la table (2) dans une plage mobile prédéterminée, et le dispositif de découpe (50) comprend en outre un mécanisme de butée intermédiaire (70) permettant d'arrêter le mouvement horizontal de l'unité d'outil (10) à une position où le bord périphérique de l'outil de découpe (12) est positionné à proximité de la ligne d'intersection entre la surface de positionnement (7a) du guide (7) et la surface supérieure de la table (2).

3. Dispositif de découpe (1 ; 50) selon la revendication 1 ou 2, comprenant en outre un capot amovible (13) permettant de couvrir et de découvrir une partie inférieure de l'outil de découpe rotatif (12) en réponse au mouvement vertical de l'unité d'outil (10).

4. Dispositif de découpe (50) selon la revendication 3, comprenant en outre un capot auxiliaire (80) configuré pour couvrir une partie de l'outil de découpe (12) qui ne peut pas être couverte par le capot fixe (11b) et le capot amovible (13).

5. Dispositif de découpe (1 ; 50) selon l'une quelconque des revendications précédentes, comprenant en outre un guide auxiliaire (8) pouvant se fixer au guide de positionnement (7) pour augmenter une hauteur d'une surface de positionnement (7a) du guide de positionnement (7).

6. Dispositif de découpe (1 ; 50) selon l'une quelconque des revendications précédentes, dans lequel :
le train d'engrenages (20 ; 30) comprend en outre un engrenage mené (21) positionné entre l'engrenage d'entraînement (15b) et l'engrenage de sortie (26), l'engrenage mené (21) venant en prise avec l'engrenage d'entraînement (15b), et l'engrenage intermédiaire (23, 24 ; 31a, 24) recevant la transmission de la force provenant de l'engrenage mené (21) et venant en prise avec l'engrenage de sortie (26) ; et
chacun parmi l'engrenage d'entraînement (15b) et l'engrenage mené (21) comprend un engrenage conique.

7. Dispositif de découpe (1 ; 50) selon l'une quelconque des revendications précédentes, dans lequel :
le capot fixe (11b) présente une partie d'extrémité inférieure comprenant une partie arrière (11c) et une partie avant (11d) positionnées sur des côtés opposés par rapport à l'axe de rotation de l'outil de découpe (12) ;
lorsque l'unité d'outil (10) est positionnée à une position sensiblement la plus basse, la partie arrière (11c) est positionnée à un premier niveau et se place verticalement face au guide (7), alors que la partie avant (11d) est positionnée à un deuxième niveau et ne se place pas face au guide (7) ; et
le premier niveau est plus haut que le deuxième niveau.

8. Dispositif de découpe (50) selon l'une quelconque des revendications précédentes, dans lequel l'unité d'outil (10) se déplace par rapport à la table (2) dans un sens horizontal et comprend en outre un mécanisme de butée (70) pour arrêter le déplacement horizontal de l'unité d'outil (10) à une position où la partie arrière (11c) se place verticalement face au guide (7) et la partie avant (11 d) ne se place pas face au guide (7) lorsque l'unité d'outil (10) est positionnée à une position sensiblement la plus basse.

9. Dispositif de découpe (1 ; 50) selon l'une quelconque des revendications précédentes, dans lequel l'unité d'outil (10) comprend en outre :
un arbre intermédiaire (15b), dans lequel :
le moteur électrique (15) présente l'arbre de sortie (15a) et l'engrenage d'entraînement (15b) peut tourner (2) avec l'arbre de sortie (1 5a) ;
l'arbre intermédiaire (22 ; 31) présente un engrenage mené (21) et l'engrenage intermédiaire (23, 24 ; 31 a, 24) chacun pouvant tourner (2) avec l'arbre intermédiaire (22 ; 31), l'engrenage mené (21) venant en prise avec l'engrenage d'entraînement (15b) ;
la broche (16) présente l'engrenage de sortie (26) pouvant tourner (2) avec la broche (16) et reçoit la transmission de puissance provenant de l'engrenage intermédiaire (23, 24 ; 31 a, 24).

10. Dispositif de découpe (1 ; 50) selon l'une quelconque des revendications précédentes, comprenant en outre un arbre intermédiaire (22) présentant l'engrenage intermédiaire (23 ; 31 a) monté sur celui-ci et s'étendant parallèlement à la broche (16), dans lequel l'arbre intermédiaire (22) est soutenu par le capot fixe (11 b), de sorte que l'arbre intermédiaire (22 ; 31) puisse tourner autour de son axe et ne puisse pas se déplacer le long d'un sens axial.

11. Dispositif de découpe (1 ; 50) selon l'une quelconque des revendications précédentes, dans lequel :
une distance parmi une distance L1 dans un sens vertical entre un centre de rotation de l'outil de découpe rotatif (12) et la surface supérieure de la table (2) et une distance L2 dans un sens horizontal entre le centre de rotation de l'outil de découpe rotatif (12) et une surface de positionnement (7a) du guide (7) est de 81 mm et l'autre distance parmi la distance L1 et la distance L2 est de 97 mm ;
l'unité d'outil (10) comprend un capot fixe (11b) configuré pour couvrir une partie supérieure de l'outil de découpe (12) ; et
une distance L3 dans le sens vertical entre la partie arrière (11 c) de la partie d'extrémité inférieure du capot fixe (11b) et la surface supérieure de la table (2) est supérieure ou égale à 119 mm à une position sur le côté avant de la surface de positionnement (7a) du guide (7).

12. Dispositif de découpe (1 ; 50) selon l'une quelconque des revendications 1 à 10, dans lequel :
une distance dans un sens vertical entre la partie arrière (11c) de la partie d'extrémité inférieure du capot fixe (11b) et la surface supérieure de la table (2) est supérieure ou égale à 119 mm lorsqu'un bord périphérique de l'outil de découpe (12) est positionné à proximité d'une ligne d'intersection entre la surface de positionnement (7a) du guide (7) et la surface supérieure de la table (2), alors que l'unité d'outil (10) est positionnée à sa fin de course inférieure.

13. Dispositif de découpe (1 ; 50) selon la revendication 11 ou 12, dans lequel la distance L3 et/ou la distance verticale est comprise entre 119 mm et 145 mm.

14. Dispositif de découpe (1 ; 50) selon l'une quelconque des revendications précédentes, dans lequel le train d'engrenages (20 ; 30) comprend un premier engrenage intermédiaire (23 ; 31a) et un deuxième engrenage intermédiaire (24).
